# EUROPÄISCHE PATENTSCHRIFT

(11) **EP 3 173 253 B1**
(45) Veröffentlichungstag und Bekanntmachung des Hinweises auf die Patenterteilung: **15.04.2020**
(21) Anmeldenummer: 16183374.4
(22) Anmeldetag: 09.08.2016
(51) Int. Cl.: B60C 11/03, B60C 11/12

(54) **FAHRZEUGLUFTREIFEN**
PNEUMATIC TYRES FOR A VEHICLE
PNEUMATIQUES DE VÉHICULE

(30) Priorität: 25.11.2015 DE 102015223356
(43) Veröffentlichungstag der Anmeldung: 31.05.2017
(73) Patentinhaber: Continental Reifen Deutschland GmbH, 30165 Hannover (DE)
(72) Erfinder: Robelo, Marco, 30159 Hannover (DE); Pagac, Lubomir, 020 01 Puchov (SK)
(74) Vertreter: Finger, Karsten

(56) Entgegenhaltungen:
- DE-A1-102012 111 116
- JP-A- 2005 289 122
- JP-A- 2008 037 223

## Beschreibung

Die Erfindung betrifft einen Fahrzeugluftreifen mit einem profilierten Laufstreifen mit zwei schulterseitig verlaufenden Blockreihen und zwei mittleren Blockreihen, wobei die Blockreihen voneinander durch in Umfangsrichtung umlaufende Umfangsrillen getrennt sind und die zwischen den beiden mittleren Blockreihen verlaufende Umfangsrille entlang des Reifenäquators verläuft, wobei in jeder mittleren Blockreihe jeweils eine Vielzahl von zumindest im Wesentlichen parallel zueinander verlaufenden, mehrere Rillenabschnitte aufweisenden Rillen ausgebildet ist, wobei ein erster Rillenabschnitt in die entlang des Reifenäquators verlaufende Umfangsrille und ein weiterer Rillenabschnitt in die die Blockreihe außenseitig begrenzende Umfangsrille einmündet, wobei diese Rillenabschnitte im Wesentlichen in axialer Richtung verlaufen.

Es ist bekannt, Laufstreifen von Fahrzeugluftreifen mit im mittleren Bereich und beidseitig des Reifenäquators verlaufenden Blockreihen zu versehen, welche durch Rillen, die mehrere zueinander unterschiedlich orientierte Rillenabschnitte aufweisen, in Blöcke oder blockartige Strukturen gegliedert sind.

Ein Nutzfahrzeugreifen mit einem Laufstreifen mit schulterseitig verlaufenden Profilrippen und zwei mittleren Blockreihen ist aus der JP 2005 289 122 A bekannt. In den mittleren Blockreihen verlaufen Querrillen mit drei Rillenabschnitten, wobei die beiden äußeren Rillenabschnitte in Umfangsrillen münden und der mittlere Rillenabschnitt unter stumpfen Winkeln zu den äußeren Rillenabschnitten verläuft. Ein Nutzfahrzeugreifen mit einem derart gestalteten Laufstreifen soll eine gute Abriebbeständigkeit und einen gute Nassgriff aufweisen.

Aus der JP 2008 037 223 A ist ebenfalls ein Fahrzeugluftreifen mit einem Laufstreifen mit schulterseitig verlaufenden Profilrippen und zwei mittlere Blockreihen bekannt. Schmale, in Draufsicht gerade verlaufende Querrillen gliedern die Blockreihen in Blöcke. Die Querrillen weisen über ihren Verlauf einen variierende Tiefe auf, um ein Verfangen von Steinen zu vermeiden.

Ferner ist aus der DE 10 2012 111 116 A1 ein Nutzfahrzeugreifen mit einem Laufstreifen bekannt, in dessen Hälften jeweils zwei Blockreihenpaare vorgesehen sind, wobei zwischen unterschiedlichen Blockreihenpaaren erste Umfangsrillen verlaufen. Zwischen den zwei Blockreihen jedes Blockreihenpaares verläuft eine schmäler und seichter als die erste Umfangsrille ausgeführte zweite Umfangsrille. Innerhalb jeder Blockreihe verlaufen in Draufsicht gerade, in die entsprechenden Umfangsrillen einmündende, die Blöcke jeder Blockreihe voneinander trennende Querrillen, wobei die Tiefe der Querrillen von der entsprechenden ersten Umfangsrille zur entsprechenden zweiten Umfangsrille abnimmt. Dieser Nutzfahrzeugreifen soll gute Traktions- und Handlingeigenschaften auf Schneefahrbahnen aufweisen.

Darüber hinaus ist es bekannt, im mittleren Bereich des Laufstreifens in Umfangsrichtung umlaufende Profilbänder vorzusehen, welche mit einer Vielzahl von Einschnitten einer Breite < 1 mm versehen sind, welche durch eine Gliederung in drei Abschnitte in Draufsicht im Wesentlichen Z-förmig verlaufen. Ein Fahrzeugluftreifen mit einem derartigen Laufstreifen, bei welchem Z-förmig verlaufende Einschnitte unter einem relativ geringen gegenseitigen Abstand zueinander verlaufen, ist beispielsweise aus der EP 1 993 855 B1 bekannt.

Fahrzeugluftreifen mit relativ breiten Blockreihen im mittleren Bereich des Laufstreifens - solche Fahrzeugluftreifen sind meist für einen Einsatz unter winterlichen Fahrbedingungen und bei nassen Straßenverhältnissen vorgesehen - benötigen Rillen in diesen Blockreihen, die eine gute Nässeperformance, sicherstellen, insbesondere gute Bremseigenschaften auf nassen Fahrbahnen, gute Handlingeigenschaften bei Nässe und ein gutes Aquaplaningverhalten. Insbesondere sollen diese Rillen derart gestaltet sein, dass sie eine möglichst optimale Ableitung des vom Untergrund in die mittleren Blockreihen einströmenden Wassers in Richtung der Umfangsrillen gewährleisten. Diesbezüglich sind die bislang bekannten Rillen in mittleren Blockreihen von Laufstreifen verbesserungswürdig.

Der Erfindung liegt somit die Aufgabe zu Grunde, die Rillen in den mittleren Blockreihen derart zu gestalten, dass die Nässeperformance wesentlich verbessert wird.

Gelöst wird die gestellte Aufgabe erfindungsgemäß dadurch, dass die beiden jeweils in eine Umfangsrille *ein*mündenden Rillenabschnitte durch zwei weitere V-förmig zueinander verlaufende Rillenabschnitte miteinander verbunden sind, wobei die Rille im Bereich der V-Spitze ihre geringste Tiefe aufweist und entlang der beiden V-förmig verlaufenden Rillenabschnitte sowie entlang der an diese anschließenden, in je eine Umfangsrille einmündenden Rillenabschnitte kontinuierlich tiefer wird.

Die beiden V-förmig zueinander verlaufenden Rillenabschnitte gewährleisten ein optimales Einströmen von Wasser im mittleren Bereich der Blockreihen, die größer werdende Tiefe der Rillen in Richtung der beiden Umfangsrillen bewirkt ein schnelles und leichtes Abströmen von Wasser aus dem mittleren Bereich der Blockreihen in die Umfangsrillen. Gerade bei relativ breiten Blockreihen im mittleren Bereich des Laufstreifens wird dadurch die Nässeperformance in erwünschter Weise optimiert. Darüber hinaus stellen die vier Rillenabschnitte auf schneebedeckten Fahrbahnen Griffkanten für einen guten Schneegriff zur Verfügung und dienen als Schneetaschen zum Einfangen von Schnee, sodass die Schnee-Schnee-Reibung ebenfalls verbessert wird.

Um ein optimales Abströmen von Wasser aus dem mittleren Bereich der Blockreihen in die Umfangsrillen zu gewährleisten, kann eine Anzahl weiterer erfindungsgemäßer Maßnahmen getroffen werden, wie nachstehend erläutert wird.

Bei einer bevorzugten Ausführungsform der Erfindung erstreckt sich der erste Rillenabschnitt bis in den mittleren Bereich der Blockreihe. Besonders bevorzugt ist ferner, dass der zweite Rillenabschnitt unter einem Winkel von 60° bis 90° zum ersten Rillenabschnitt verläuft und eine Erstreckungslänge aufweist, die im Wesentlichen der Erstreckungslänge des ersten Rillenabschnittes entspricht oder um bis zu 20 % größer ist als die Erstreckungslänge des ersten Rillenabschnittes. Für eine gute Wasserableitung ist es ferner von Vorteil, wenn der zweite und der dritte Rillenabschnitt miteinander einen Winkel von 15° bis 35° einschließen.

Erfindungsgemäß sollte ferner der dritte Rillenabschnitt eine Erstreckungslänge aufweisen, die höchstens der Erstreckungslänge des zweiten Rillenabschnittes entspricht und insbesondere um 10 % bis 20 % geringer ist als diese. Der zweite und der dritte Rillenabschnitt stellen dadurch Wasserableitungswege zu jeder der beiden die betreffende Blockreihe begrenzenden Umfangsrillen zur Verfügung. In diesem Zusammenhang ist es ferner von Vorteil, wenn gemäß der Erfindung die zueinander V-förmig verlaufenden Rillenabschnitte eine geringere Breite aufweisen, als der erste und der vierte Rillenabschnitt.

Ein optimales Einströmen von Wasser im mittleren Bereich der Blockreihe wird, wie bereits erwähnt, durch die größer werdende Tiefe der Rillen in Richtung der beiden Umfangsrillen erzielt. Eine diesbezüglich besonders vorteilhafte und bevorzugte Ausgestaltung sieht vor, dass der erste und der vierte Rillenabschnitt, von der jeweiligen Umfangsrille ausgehend und entlang der Erstreckung der Rillenabschnitte betrachtet, einen als kontinuierlich ansteigende Rampe ausgebildeten Rillengrund aufweisen, wobei die Tiefe der Rillenabschnitte am Mündungsbereich zur jeweiligen Umfangsrille um 1 mm bis 2 mm geringer ist, als die maximale Tiefe der Umfangsrille, und wobei die Tiefe der Rillenabschnitte am jeweiligen innenseitigen Ende 0,5 mm bis 2,5 mm beträgt.

Eine weitere, diesbezüglich vorteilhafte Maßnahme besteht darin, dass die beiden V-förmig zueinander verlaufenden Rillenabschnitte, entlang der Erstreckung der Rillenabschnitte betrachtet, jeweils einen als zur V-Spitze ansteigende Rampe ausgebildeten Rillengrund aufweisen, wobei die Tiefe dieser Rillenabschnitte im Bereich der V-Spitze 0,8 mm bis 1,2 mm beträgt.

Um das Rillenvolumen der Rillenabschnitte möglichst groß zu halten ist es vorteilhaft, wenn sämtliche Rillenabschnitte einen U-förmigen Querschnitt und an der Laufstreifenaußenfläche eine Mindestbreite von 1,5 mm aufweisen, wobei der erste Rillenabschnitt als breitester Rillenabschnitt ausgeführt ist und vorzugsweise eine Breite von 3 mm bis 7 mm aufweist. Auch der vierte Rillenabschnitt ist bei einer bevorzugten Ausführungsform der Erfindung relativ breit und weist eine Breite von 2,5 mm bis 6 mm auf. Bei den beiden zueinander V-förmig verlaufenden Rillenabschnitten ist erfindungsgemäß eine Breite von 1,5 mm bis 2,5 mm für ein möglichst verwirbelungsfreies Abströmen von Wasser besonders vorteilhaft.

Bei einer Ausführung des Fahrzeugluftreifens mit einem nicht laufrichtungsgebundenen Laufstreifen ist es von Vorteil, wenn die beiden V-förmig verlaufenden Rillenabschnitte in der einen mittleren Blockreihe sämtlich in die eine Umfangsrichtung und in der anderen mittleren Blockreihe sämtlich in die andere Umfangsrichtung weisen.

Weitere Merkmale, Vorteile und Einzelheiten der Erfindung werden nun anhand der Zeichnung, die ein Ausführungsbeispiel darstellt, näher beschrieben. Dabei zeigen
Fig. 1 eine Draufsicht auf einen Abschnitt einer Abwicklung eines Laufstreifens eines Fahrzeugluftreifens,
Fig. 2 eine Schnittdarstellung entlang der Linie II-II der Fig. 1,
Fig. 3 eine Schnittdarstellung entlang der Linie III-III der Fig. 1,
Fig. 4 eine Schnittdarstellung entlang der Linie IV-IV der Fig. 1 und
Fig. 5 eine Schnittdarstellung entlang der Linie V-V der Fig. 1.

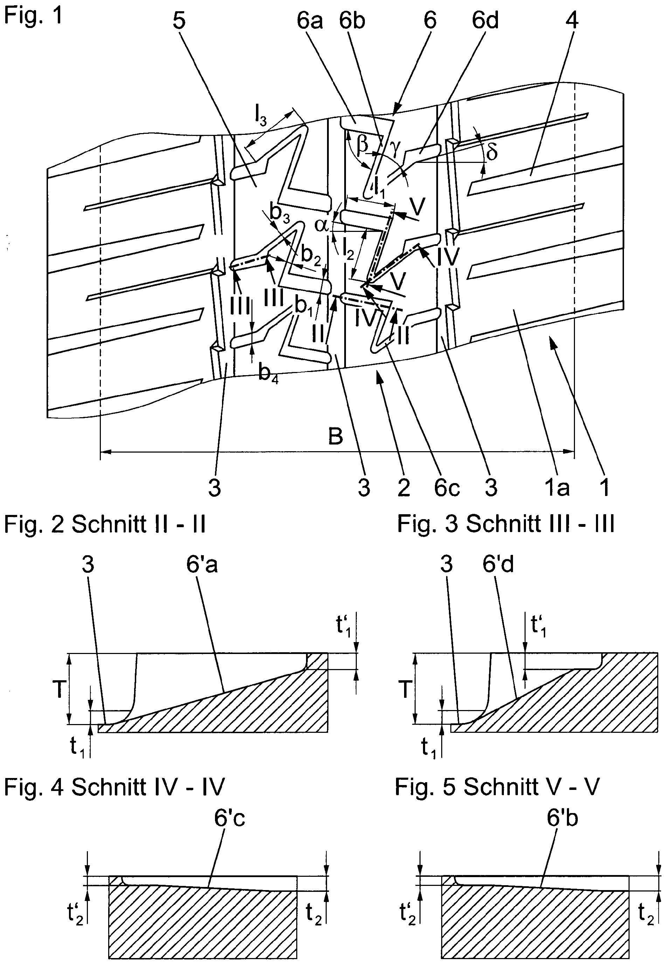

Der in Fig. 1 gezeigte Laufstreifen ist ein Laufstreifen für Fahrzeugluftreifen von PKWs, Vans oder Light-Trucks in Radialbauart. Der Laufstreifen weist zwei schulterseitige Blockreihen 1 und zwischen diesen zwei mittlere Blockreihen 2 auf, wobei die Blockreihen 1, 2 voneinander durch in Umfangsrichtung umlaufende Umfangsrillen 3 getrennt sind, von welchen die eine, die zentrale Umfangsrille 3 entlang der Äquatorialebene des Reifens verläuft. Die vier Blockreihen 1, 2 weisen im Wesentlichen gleich große Breiten auf, sodass sie sich jeweils über etwa 25 % der Bodenaufstandsflächenbreite B erstrecken. Der bodenberührende Teil des Laufstreifen entspricht dabei dem statisch ermittelten Footprint gemäß E.T.R.T.O.-Standards (Last bei 70 % der Tragfähigkeit bei einem Innendruck von 2,5 bar, Innendruck 85 % von 2,5 bar). Die beiden schulterseitigen Blockreihen 1 sind jeweils durch Querrillen 4 in Schulterblöcke 1a gegliedert, wobei bei der gezeigten Ausführungsvariante die Querrillen 4 in bekannter Weise im Wesentlichen in axialer Richtung beziehungsweise unter einem kleinen Winkel von bis zu 20° zur axialen Richtung verlaufen, in einem Abstand von einigen Millimetern vor der die jeweilige schulterseitige Blockreihe 1 begrenzenden Umfangsrille 3 enden und schulterseitig über die Bodenaufstandsflächenbreite B hinaus verlaufen. Parallel zu den Querrillen 4 können in den Schulterblöcken 1a Einschnitte mit einer Breite von höchstens 0,8 mm ausgebildet sein.

Eine Vielzahl von in Umfangsrichtung voneinander beabstandeten Rillen 6 mit speziell verlaufenden und ausgestalteten Rillenabschnitten 6a bis 6d verleiht den mittleren Blockreihen 2 die blockartige Struktur mit Profilblöcken 5. Grundsätzlich sind die Rillen 6 in den beiden mittleren Blockreihen 2 übereinstimmend ausgeführt, lediglich ihre Orientierung relativ zur Umfangsrichtung ist unterschiedlich, wobei die Rillen 6 in jeder mittleren Blockreihe 2 im Wesentlichen parallel zueinander verlaufen. Nachfolgend wird eine der Rillen 6 aus der in Fig. 1 weiter rechts verlaufenden mittleren Blockreihe 2 näher beschrieben.

Die Rille 6 weist einen ersten Rillenabschnitt 6a auf, welcher von der zentralen Umfangsrille 3 ausgehend, in Draufsicht im Wesentlichen geradlinig verlaufend, etwa bis zur Mitte der Blockreihe 2 reicht. Der Rillenabschnitt 6a erstreckt sich unter einem Winkel α von 5° bis 20° zur axialen Richtung und weist eine Erstreckungslänge l₁ entsprechend seiner Erstreckung bis in den mittleren Bereich der Blockreihe 2 auf. An den Rillenabschnitt 6a schließt ein Rillenabschnitt 6b an, welcher sich unter einem Winkel β von 60° bis 90° zum Rillenabschnitt 6a und ebenfalls geradlinig verlaufend, erstreckt. Die Erstreckungslänge l₂ des Rillenabschnittes 6b entspricht zumindest der Erstreckungslänge l₁ des Rillenabschnittes 6a und ist insbesondere um bis zu 20 % größer als diese. An den Rillenabschnitt 6b schließt unter einem Winkel γ von 15° bis 35° der dritte, geradlinig verlaufende Rillenabschnitt 6c an, derart, dass die beiden Rillenabschnitte 6b und 6c V-förmig zueinander verlaufen. Die Erstreckungslänge l₃ des dritten Rillenabschnittes 6c ist um 10 % bis 20 % geringer als die Erstreckungslänge l₂ des Rillenabschnittes 6b. Ein vierter, ebenfalls geradlinig verlaufender Rillenabschnitt 6d verbindet den Rillenabschnitt 6c mit der die mittlere Blockreihe 2 von außen begrenzenden Umfangsrille 3. Der Rillenabschnitt 6d verläuft bezüglich der axialen Richtung gegensinnig zum Rillenabschnitt 6a und unter einem Winkel δ von 5° bis 15° zur axialen Richtung, sodass die Rillenabschnitte 6a und 6d ein sehr flaches V miteinander einschließen, wobei die Ausführung auch derart sein kann, dass die Rillenabschnitte 6a und 6d zumindest im Wesentlichen parallel zueinander verlaufen.

Bei der dargestellten, bevorzugten Ausführungsform weisen sämtliche Rillenabschnitte 6a bis 6d einen im Wesentlichen U-förmigen Querschnitt auf mit im Wesentlichen in radialer Richtung verlaufenden Rillenwänden. Der Rillenabschnitt 6a weist eine über seine Erstreckung eine weitgehend konstante Breite b₁ von 3 mm bis 7 mm auf, die Breite b₄ des Rillenabschnittes 6d beträgt in der Größenordnung von 2,5 mm bis 6,0 mm und ist somit etwas geringer als die Breite b₁. Dabei kann die Breite b₄ über die Erstreckung des Rillenabschnittes 6d konstant sein oder sich in Richtung Umfangsrille 3 geringfügig verringern. Die Rillenabschnitte 6b und 6c weisen Breiten b₂ bzw. b₃ auf, welche geringer sind als die Breiten b₁ und b₄ und jeweils in der Größenordnung von 1,5 mm bis 2,5 mm betragen.

Von besonderer Bedeutung für die Nässeperformance - die Brems- und Handlingeigenschaften auf nasser Fahrbahn sowie das Aquaplaningverhalten - sind die speziellen Tiefenverläufe in den Rillenabschnitten 6a bis 6d. Wie die Schnittdarstellung in Fig. 2 zeigt, ist der Rillengrund 6'a im Rillenabschnitt 6a als von der Umfangsrille 3 zum innenseitigen Ende des Rillenabschnittes 6a kontinuierlich ansteigende Rampe ausgebildet.

Dabei weist der Rillengrund 6'a an seinem bei der zentralen Umfangsrille 3 befindlichen Ende eine Tiefe t₁ auf, die um 1 mm bis 2 mm geringer ist als die maximale Tiefe T der Umfangsrille 3. An seinem zweiten, innenseitigen Ende befindet sich der Rillengrund 6'a in einer Tiefe t₁', die 0,5 mm bis 2,5 mm, insbesondere 2 mm, beträgt. Der Rillenabschnitt 6d weist einen Rillengrund 6'd auf, der auf analoge Weise ausgehend von der die Blockreihe 2 außenseitig begrenzenden Umfangsrille 3 verläuft, daher als in Richtung Blockreiheninneres ansteigende Rampe, mit den erwähnten Tiefen t₁ und t₁'. Fig. 4 zeigt eine Schnittdarstellung entlang des Verlaufes des Rillenabschnittes 6b, dessen Rillengrund 6'b in Richtung der V-Spitze zwischen den Rillenabschnitten 6b und 6c seichter wird und somit eine flach verlaufende Rampe bildet. Der Rillengrund 6'c ist auf analoge Weise zum Rillengrund 6'b ausgeführt. Die Tiefe t₂ der Rillenabschnitte 6b und 6c im Bereich ihrer Übergänge zu den Rillenabschnitten 6a und 6d entspricht der Tiefe t₁, die Tiefe t₂' an der Spitze beträgt 0,8 mm bis 1,2 mm, insbesondere 1,0 mm. Der spezielle Verlauf der Rillenabschnitte 6a bis 6d und der Rillengründe 6'a bis 6'd mit von der V-Spitze zu den Umfangsrillen 3 zunehmender Tiefe ist besonders günstig für ein optimales Ableiten von Wasser aus dem mittleren Laufstreifenbereich in sämtliche Umfangsrillen 3.

### Bezugsziffernliste

- 1 .............................: Blockreihe
- 1a ...........................: Schulterblock
- 2 .............................: Blockreihe
- 3 .............................: Umfangsrille
- 4 .............................: Querrille
- 5 .............................: Profilblock
- 6 .............................: Rille
- 6a, 6b, 6c, 6d ..........: Rillenabschnitt
- 6'a, 6'b, 6'c, 6'd .....: Rillengrund
- b₁, b₂, b₃, b₄ ............: Breite
- l₁, l₂, l₃ ....................: Erstreckungslänge
- t₁, t₁',t₂, t₂' ..............: Tiefe
- T.............................: Tiefe
- α, β, γ, δ .................: Winkel

## Patentansprüche

1. Fahrzeugluftreifen mit einem profilierten Laufstreifen mit zwei schulterseitig verlaufenden Blockreihen (1) und zwei mittleren Blockreihen (2), wobei die Blockreihen (1, 2) voneinander durch in Umfangsrichtung umlaufende Umfangsrillen (3) getrennt sind und die zwischen den beiden mittleren Blockreihen (2) verlaufende Umfangsrille (3) entlang des Reifenäquators verläuft, wobei in jeder mittleren Blockreihe (2) jeweils eine Vielzahl von zumindest im Wesentlichen parallel zueinander verlaufenden, mehrere Rillenabschnitte (6a, 6b, 6c, 6d) aufweisenden Rillen (6) ausgebildet ist, wobei ein erster Rillenabschnitt (6a) in die entlang des Reifenäquators verlaufende Umfangsrille (3) und ein weiterer Rillenabschnitt (6d) in die die Blockreihe (2) außenseitig begrenzende Umfangsrille (3) einmündet, wobei diese Rillenabschnitte (6a, 6d) im Wesentlichen in axialer Richtung verlaufen, **dadurch gekennzeichnet,**
**dass** die beiden jeweils in eine Umfangsrille (3) einmündenden Rillenabschnitte (6a, 6d) durch zwei weitere V-förmig zueinander verlaufende Rillenabschnitte (6b, 6c) miteinander verbunden sind, wobei die Rille (6) im Bereich der V-Spitze ihre geringste Tiefe aufweist und entlang der beiden V-förmig verlaufenden Rillenabschnitte (6b, 6c) sowie der an diese anschließenden, in je eine Umfangsrille (3) einmündenden Rillenabschnitte (6a, 6d) kontinuierlich tiefer wird.

2. Fahrzeugluftreifen nach Anspruch 1, **dadurch gekennzeichnet, dass** sich der erste Rillenabschnitt (6a) bis in den mittleren Bereich der Blockreihe (2) erstreckt.

3. Fahrzeugluftreifen nach Anspruch 1 oder 2, **dadurch gekennzeichnet, dass** der zweite Rillenabschnitt (6b) unter einem Winkel (β) von 60° bis 90° zum ersten Rillenabschnitt (6a) verläuft und eine Erstreckungslänge (l₂) aufweist, die im Wesentlichen der Erstreckungslänge (l₁) des ersten Rillenabschnittes (6a) entspricht oder um bis zu 20% größer ist als die Erstreckungslänge (l₁) des ersten Rillenabschnittes (6a).

4. Fahrzeugluftreifen nach einem der Ansprüche 1 bis 3, **dadurch gekennzeichnet, dass** der zweite und der dritte Rillenabschnitt (6b, 6c) miteinander einen Winkel (γ) von 15° bis 35° einschließen.

5. Fahrzeugluftreifen nach einem der Ansprüche 1 bis 4, **dadurch gekennzeichnet, dass** der dritte Rillenabschnitt (6c) eine Erstreckungslänge (l₃) aufweist, die höchstens der Erstreckungslänge (l₂) des zweiten Rillenabschnittes (6b) entspricht und die insbesondere um 10% bis 20% geringer ist als diese.

6. Fahrzeugluftreifen nach einem der Ansprüche 1 bis 5, **dadurch gekennzeichnet, dass** die zueinander V-förmig verlaufenden Rillenabschnitte (6b, 6c) eine geringere Breite aufweisen als der erste und der vierte Rillenabschnitt (6a, 6d).

7. Fahrzeugluftreifen nach einem der Ansprüche 1 bis 6, **dadurch gekennzeichnet, dass** der erste und der vierte Rillenabschnitt (6a, 6d) von der jeweiligen Umfangsrille (3) ausgehend und entlang der Erstreckung der Rillenabschnitte (6a, 6d) betrachtet einen als kontinuierlich ansteigende Rampe ausgebildeten Rillengrund (6a', 6'd) aufweisen, wobei die Tiefe (t₁) der Rillenabschnitte (6a, 6d) am Mündungsbereich zur jeweiligen Umfangsrille (3) um 1 mm bis 2 mm geringer ist als die maximale Tiefe (T) der Umfangsrille (3), und wobei die Tiefe (t₁) der Rillenabschnitte (6a, 6d) am jeweiligen innenseitigen Ende 0,5 mm bis 2,5 mm beträgt.

8. Fahrzeugluftreifen nach einem der Ansprüche 1 bis 7, **dadurch gekennzeichnet, dass** die beiden V-förmig zueinander verlaufenden Rillenabschnitte (6b, 6c), entlang der Erstreckung der Rillenabschnitte (6b, 6c) betrachtet, jeweils einen als zur V-Spitze ansteigende Rampe ausgebildeten Rillengrund (6'b, 6'c) aufweisen, wobei die Tiefe (t_{2'}) dieser Rillenabschnitte (6b, 6c) im Bereich der V-Spitze 0,8 mm bis 1,2 mm beträgt.

9. Fahrzeugluftreifen nach einem der Ansprüche 1 bis 8, **dadurch gekennzeichnet, dass** sämtliche Rillenabschnitte (6a bis 6d) einen U-förmigen Querschnitt aufweisen.

10. Fahrzeugluftreifen nach einem der Ansprüche 1 bis 9 **dadurch gekennzeichnet, dass** die Rillenabschnitte (6a bis 6d) an der Laufstreifenaußenfläche eine Mindestbreite von 1,5 mm aufweisen.

11. Fahrzeugluftreifen nach einem der Ansprüche 1 bis 10, **dadurch gekennzeichnet, dass** der erste Rillenabschnitt (6a) der breiteste Rillenabschnitt ist und vorzugsweise eine Breite (b₁) von 3 mm bis 7 mm aufweist.

12. Fahrzeugluftreifen nach einem der Ansprüche 1 bis 11, **dadurch gekennzeichnet, dass** der vierte Rillenabschnitt (6d) eine Breite (b₄) von 2,5 mm bis 6 mm aufweist.

13. Fahrzeugluftreifen nach einem der Ansprüche 1 bis 12, **dadurch gekennzeichnet, dass** die beiden zueinander V-förmig verlaufenden Rillenabschnitte (6b, 6c) eine Breite (b₂, b₃) von 1,5 mm bis 2,5 mm aufweisen.

14. Fahrzeugluftreifen nach einem der Ansprüche 1 bis 13, **dadurch gekennzeichnet, dass** die beiden zueinander V-förmig verlaufenden Rillenabschnitte (6b, 6c) in der einen mittleren Blockreihe (2) sämtlich in die eine Umfangsrichtung weisen und in der anderen mittleren Blockreihe (2) sämtlich in die andere Umfangsrichtung weisen.

## Claims

1. Pneumatic vehicle tyre with a profiled tread comprising two rows of blocks (1) running along the shoulders and two middle rows of blocks (2), wherein the rows of blocks (1, 2) are separated from one another by circumferential grooves (3) running around in the circumferential direction and the circumferential groove (3) that runs between the two middle rows of blocks (2) runs along the equator of the tyre, wherein in each middle row of blocks (2) there is respectively formed a multiplicity of grooves (6), which run at least substantially parallel to one another and have a number of groove portions (6a, 6b, 6c, 6d), wherein a first groove portion (6a) merges into the circumferential groove (3) running along the equator of the tyre and a further groove portion (6d) merges into the circumferential groove (3) bounding the row of blocks (2) on the outside, wherein these groove portions (6a, 6d) run substantially in the axial direction, **characterized**
**in that** the two groove portions (6a, 6d) respectively merging into a circumferential groove (3) are connected to one another by two further groove portions (6b, 6c) running in a V-shaped manner in relation to one another, wherein the groove (6) has its smallest depth in the region of the tip of the V and becomes continuously deeper along the two groove portions (6b, 6c) running in a V-shaped manner and also the groove portions (6a, 6d) adjoining them and each merging into a circumferential groove (3).

2. Pneumatic vehicle tyre according to Claim 1, **characterized in that** the first groove portion (6a) extends into the middle region of the row of blocks (2) .

3. Pneumatic vehicle tyre according to Claim 1 or 2, **characterized in that** the second groove portion (6b) runs at an angle (β) of 60° to 90° in relation to the first groove portion (6a) and has a length of extent (l₂), which corresponds substantially to the length of extent (l₁) of the first groove portion (6a) or is greater by up to 20% than the length of extent (l₁) of the first groove portion (6a).

4. Pneumatic vehicle tyre according to one of Claims 1 to 3, **characterized in that** the second and third groove portions (6b, 6c) form with one another an angle (γ) of 15° to 35°.

5. Pneumatic vehicle tyre according to one of Claims 1 to 4, **characterized in that** the third groove portion (6c) has a length of extent (l₃), which corresponds at most to the length of extent (l₂) of the second groove portion (6b) and which is in particular smaller than it by 10% to 20%.

6. Pneumatic vehicle tyre according to one of Claims 1 to 5, **characterized in that** the groove portions (6b, 6c) running in a V-shaped manner in relation to one another have a smaller width than the first and fourth groove portions (6a, 6d).

7. Pneumatic vehicle tyre according to one of Claims 1 to 6, **characterized in that** the first and fourth groove portions (6a, 6d), when considered from the respective circumferential groove (3) and along the extent of the groove portions (6a, 6d), have a groove base (6a', 6'd) formed as a continuously rising ramp, wherein the depth (t₁) of the groove portions (6a, 6d) at the merging region in relation to the respective circumferential groove (3) is smaller by 1 mm to 2 mm than the maximum depth (T) of the circumferential groove (3), and wherein the depth (t₁) of the groove portions (6a, 6d) at the respective inner end is 0.5 mm to 2.5 mm.

8. Pneumatic vehicle tyre according to one of Claims 1 to 7, **characterized in that** the two groove portions (6b, 6c) running in a V-shaped manner in relation to one another, when considered along the extent of the groove portions (6b, 6c), have in each case a groove base (6'b, 6'c) formed as a ramp rising to the tip of the V, wherein the depth (t₂) of these groove portions (6b, 6c) in the region of the tip of the V is 0.8 mm to 1.2 mm.

9. Pneumatic vehicle tyre according to one of Claims 1 to 8, **characterized in that** all of the groove portions (6a to 6d) have a U-shaped cross section.

10. Pneumatic vehicle tyre according to one of Claims 1 to 9, **characterized in that** the groove portions (6a to 6d) have on the outer surface of the tread a minimum width of 1.5 mm.

11. Pneumatic vehicle tyre according to one of Claims 1 to 10, **characterized in that** the first groove portion (6a) is the widest groove portion and preferably has a width (b₁) of 3 mm to 7 mm.

12. Pneumatic vehicle tyre according to one of Claims 1 to 11, **characterized in that** the fourth groove portion (6d) has a width (b₄) of 2.5 mm to 6 mm.

13. Pneumatic vehicle tyre according to one of Claims 1 to 12, **characterized in that** the two groove portions (6b, 6c) running in a V-shaped manner in relation to one another have a width (b₂, b₃) of 1.5 mm to 2.5 mm.

14. Pneumatic vehicle tyre according to one of Claims 1 to 13, **characterized in that** the two groove portions (6b, 6c) running in a V-shaped manner in relation to one another in the one middle row of blocks (2) all point in one circumferential direction and in the other middle row of blocks (2) all point in the other circumferential direction.

## Revendications

1. Pneumatique de véhicule comprenant une bande de roulement profilée avec deux rangées de blocs (1) s'étendant du côté de l'épaulement et deux rangées de blocs centrales (2), les rangées de blocs (1, 2) étant séparées l'une de l'autre par des rainures périphériques (3) s'étendant dans la direction périphérique et la rainure périphérique (3) s'étendant entre les deux rangées de blocs centrales (2) s'étendant le long de l'équateur du pneu, une pluralité de rainures (6) présentant plusieurs portions de rainure (6a, 6b, 6c, 6d) s'étendant au moins essentiellement parallèlement les unes aux autres étant à chaque fois réalisées dans chaque rangée de blocs centrale (2), une première portion de rainure (6a) débouchant dans la rainure périphérique (3) s'étendant le long de l'équateur du pneu et une portion de rainure supplémentaire (6d) débouchant dans la rainure périphérique (3) délimitant du côté extérieur la rangée de blocs (2), ces portions de rainure (6a, 6d) s'étendant essentiellement dans la direction axiale,
**caractérisé en ce que**
les deux portions de rainure (6a, 6d) débouchant à chaque fois dans une rainure périphérique (3) sont connectées l'une à l'autre par deux portions de rainure supplémentaires (6b, 6c) s'étendant en forme de V l'une par rapport à l'autre, la rainure (6) dans la région de la pointe du V présentant sa plus faible profondeur et devenant de plus en plus profonde le long des deux portions de rainure (6b, 6c) s'étendant en forme de V ainsi que le long des portions de rainure (6a, 6d) se raccordant à celles-ci, débouchant dans une rainure périphérique respective (3).

2. Pneumatique de véhicule selon la revendication 1, **caractérisé en ce que** la première portion de rainure (6a) s'étend jusque dans la région centrale de la rangée de blocs (2).

3. Pneumatique de véhicule selon la revendication 1 ou 2, **caractérisé en ce que** la deuxième portion de rainure (6b) s'étend suivant un angle (β) de 60° à 90° par rapport à la première portion de rainure (6a) et présente une longueur d'étendue (l₂) qui correspond essentiellement à la longueur d'étendue (l₁) de la première portion de rainure (6a) ou qui est supérieure de jusqu'à 20 % à la longueur d'étendue (l₁) de la première portion de rainure (6a) .

4. Pneumatique de véhicule selon l'une quelconque des revendications 1 à 3, **caractérisé en ce que** la deuxième et la troisième portion de rainure (6b, 6c) forment l'une avec l'autre un angle (γ) de 15° à 35°.

5. Pneumatique de véhicule selon l'une quelconque des revendications 1 à 4, **caractérisé en ce que** la troisième portion de rainure (6c) présente une longueur d'étendue (l₃) qui correspond au maximum à la longueur d'étendue (l₂) de la deuxième portion de rainure (6b) et qui est en particulier inférieure à celle-ci de 10 % à 20 %.

6. Pneumatique de véhicule selon l'une quelconque des revendications 1 à 5, **caractérisé en ce que** les portions de rainure s'étendant en forme de V l'une par rapport à l'autre (6b, 6c) présentent une plus faible largeur que la première et la quatrième portion de rainure (6a, 6d).

7. Pneumatique de véhicule selon l'une quelconque des revendications 1 à 6, **caractérisé en ce que** la première et la quatrième portion de rainure (6a, 6d), vu depuis la rainure périphérique respective (3) et considéré le long de l'étendue des portions de rainure (6a, 6d), présentent une base de rainure (6a', 6'd) réalisée sous forme de rampe montant de manière continue, la profondeur (t₁) des portions de rainure (6a, 6d) au niveau de la région d'embouchure vers la rainure périphérique respective (3) étant inférieure de 1 mm à 2 mm à la profondeur maximale (T) de la rainure périphérique (3), et la profondeur (t₁) des portions de rainure (6a, 6d) au niveau de l'extrémité respective du côté intérieur étant de 0,5 mm à 2,5 mm.

8. Pneumatique de véhicule selon l'une quelconque des revendications 1 à 7, **caractérisé en ce que** les deux portions de rainure (6b, 6c) s'étendant en forme de V l'une par rapport à l'autre, considéré le long de l'étendue des portions de rainure (6b, 6c), présentent à chaque fois une base de rainure (6'b, 6'c) réalisée sous forme de rampe montant vers la pointe du V, la profondeur (t₂) de ces portions de rainure (6b, 6c) dans la région de la pointe du V étant de 0,8 mm à 1,2 mm.

9. Pneumatique de véhicule selon l'une quelconque des revendications 1 à 8, **caractérisé en ce que** toutes les portions de rainure (6a à 6d) présentent une section transversale en forme de U.

10. Pneumatique de véhicule selon l'une quelconque des revendications 1 à 9, **caractérisé en ce que** les portions de rainure (6a à 6d) présentent, au niveau de la surface extérieure de la bande de roulement, une largeur minimale de 1,5 mm.

11. Pneumatique de véhicule selon l'une quelconque des revendications 1 à 10, **caractérisé en ce que** la première portion de rainure (6a) est la portion de rainure la plus large et présente de préférence une largeur (b₁) de 3 mm à 7 mm.

12. Pneumatique de véhicule selon l'une quelconque des revendications 1 à 11, **caractérisé en ce que** la quatrième portion de rainure (6d) présente une largeur (b₄) de 2,5 mm à 6 mm.

13. Pneumatique de véhicule selon l'une quelconque des revendications 1 à 12, **caractérisé en ce que** les deux portions de rainure (6b, 6c) s'étendant en forme de V l'une par rapport à l'autre présentent une largeur (b₂, b₃) 1,5 mm à 2,5 mm.

14. Pneumatique de véhicule selon l'une quelconque des revendications 1 à 13, **caractérisé en ce que** les deux portions de rainure (6b, 6c) s'étendant en forme de V l'une par rapport à l'autre, dans l'une des rangées de blocs centrales (2), sont toutes tournées dans une direction périphérique et dans l'autre rangée de blocs centrales (2), sont toutes tournées dans l'autre direction périphérique.
